Europäisches Patentamt

European Patent Office

Office européen des brevets

(11) Veröffentlichungsnummer: **0 498 512 A2**

## EUROPÄISCHE PATENTANMELDUNG

(21) Anmeldenummer: **92200347.0**

(22) Anmeldetag: **04.02.92**

(51) Int. Cl.5: **G11B 7/09, G11B 7/095**

(30) Priorität: **08.02.91 DE 4103854**

(43) Veröffentlichungstag der Anmeldung:
**12.08.92 Patentblatt 92/33**

(84) Benannte Vertragsstaaten:
**PT**

(71) Anmelder: **Deutsche Thomson-Brandt GmbH
Hermann-Schwer-Strasse 3 Postfach 1307
W-7730 Villingen-Schwenningen(DE)**

(72) Erfinder: **Weismann,Gerhard
Thomasgasse 2
W-7730 Villingen-Schwenningen(DE)**
Erfinder: **Büchler,Christian
Terra Wohnpark 7
W-7330 VS-Marbach(DE)**

(54) **Optische Abtastvorrichtung.**

(57) 2.1 Bei einem CD-Spieler wird der die Daten der CD abtastende Lichtstrahl (L) mittels eines Spurregelkreises, der aus einem Grobantrieb (M, SP) und einem Feinantrieb (S) aufgebaut ist, entlang den Datenspuren der CD geführt. Weil der Regelbereich des Feinantriebs (S) relativ klein ist, führt der Grobantrieb (M, SP) eine optische Abtastvorrichtung (AV) so nach, daß der Regelbereich des Feinantriebs (S) symmetrisch bleibt. Wenn aber die mechanische Mittellage der Objektivlinse (0), die mittels Federn und/oder Dämpfungselementen festgelegt ist, nicht mit der optischen Mittellage übereinstimmt, arbeitet der Feinantrieb (S) unsymmetrisch.

2.2 Um unabhängig von der sich einstellenden mechanischen Mittellage der Objektivlinse (0) stets einen symmetrischen Regelbereich des Feinantriebs (S) zu gewährleisten, dient ein Signal (GS), das zur Abweichung der optischen Achse der Objektivlinse (0) von der optischen Achse der optischen Abtastvorrichtung (AV) proportional ist, als Regelsignal für den Grobantrieb (M, SP). Der Abstand zwischen den beiden optischen Achsen kann z.B. mittels eines Vierquadrantenphotodetektors erfaßt werden. Ein wesentlicher Vorteil liegt darin, daß keine mechanischen Mittel mehr nötig sind, um die Objektivlinse (0) in einer mechanischen Mittellage zu fixieren.

2.3 CD-Spieler, Videoplattenspieler, DRAW-Disc-Spieler und magneto-optische Geräte.

FIG.5

Die Erfindung betrifft eine optische Abtastvorrichtung, bei der ein Lichtstrahl mittels einer Objektivlinse auf einen rotierenden Aufzeichnungsträger fokussiert und mittels eines Spurregelkreises, der aus einem Grobantrieb zum Nachstellen der optischen Abtasrvorrichtung und einem Feinantrieb zum Führen der Objektivlinse aufgebaut ist, entlang den Datenspuren des Aufzeichnungsträgers Geführt wird.

In einem CD-Spieler Wird der Aufzeichnungsträger, die Compact-Disc, mittels eines Lichtstrahls abgetastet. Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die Platte fokussiert und von dort auf einen Photodetektor reflektiert. Aus dem Ausgangssignal des Photodetektors werden die auf der Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die Platte fokussiert wird. Mittels des Spurregelkreises, der oft auch als Radialantrieb bezeichnet wird, ist die optische Abtastvorrichtung bezüglich der Platte in radialer Richtung verschiebbar. Dadurch kann der Lichtstrahl auf den spiralförmigen Datenspuren der Compact-Disc geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar. Mittels des Feinantriebs läßt sich daher der Lichtstrahl ein kleines Stück - etwa 1 mm - entlang einem Radius der Compact-Disc fahren.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

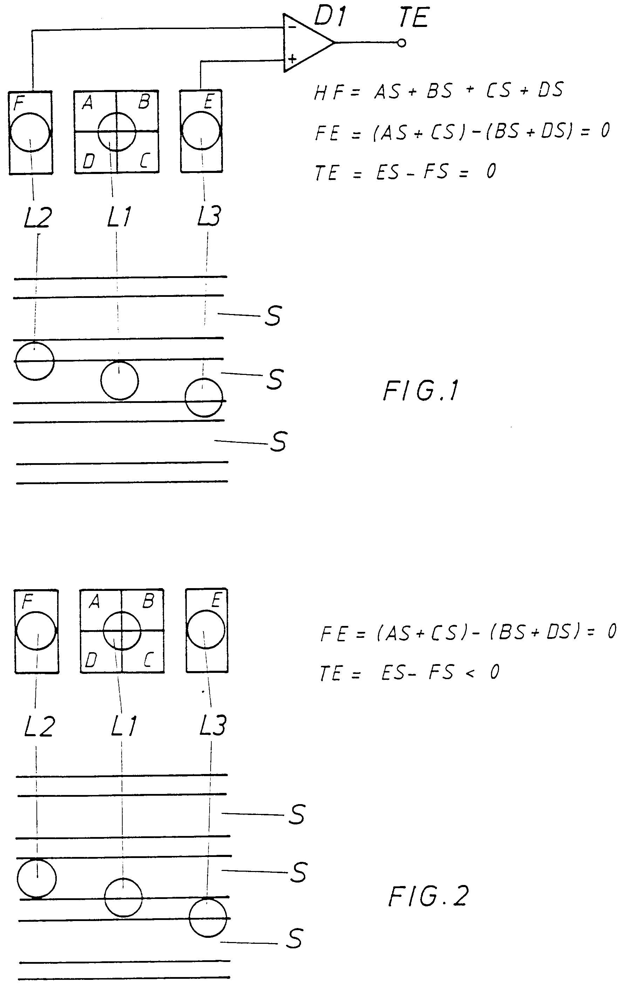

In der Figur 1 ist der Photodetektor PD der optischen Abtastvorrichtung eines CD-Spielers gezeigt, bei der drei Laserstrahlen L1, L2 und L3 auf die Platte fokussiert werden. Die Laserstrahlen L2 und L3 sind die Beugungsstrahlen +1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Bezüglich dieses aus den vier Photodioden A, B, C und D gebildeten Quadrates liegen sich zwei weitere rechteckige Photodioden E und F diagonal gegenüber. Der mittlere Laserstrahl L1, der auf die vier Photodioden A, B, C und D fokussiert wird, erzeugt das Datensignal $HF = AS + BS + CS + DS$ und das Fokusfehlersignal $FE = (AS + CS) - (BS + DS)$. Die beider äußeren Lichtstrahlen L2 und L3, von denen der vordere L2 auf die Photodiode E, der hintere L3 auf die Photodiode F fällt, erzeugen das Spurfehlersignal $TE = ES - FS$. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spurfehlersignal TE hat den Wert null.

$$TE = ES - FS = 0.$$

In der Figur 2 ist der Fall dargestellt, daß die Laserstrahlen L1, L2 und L2 nach rechts von der Spur S verschoben sind. Das Spurfehlersignal nimmt einen negativen Wert an:

$$TE = ES - FS < 0.$$

Das Stellglied des Spurregelkreises bewegt die optische Abtastvorrichtung nun soweit nach links, bis das Spurfehlersignal TE null wird.

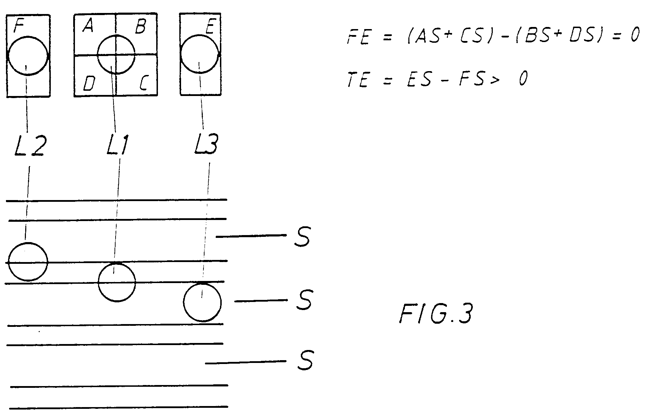

Im entgegengesetzten Fall, wenn die Laserstrahlen nach links von der Spur verschoben sind, ist das Spurfehlersignal positiv: $TE = ES - FS > 0$. Nun bewegt das Stellglied des Spurregelkreises die optische Abtastvorrichtung so weit nach rechts, bis das Spurfehlersignal TE null wird. Dieser Fall ist in Figur 3 gezeigt.

Zur Erzeugung des Spurfehlersignals macht man sich die beugende Eigenschaft der Pits bzw. der vorgeprägten Spur auf der Platte zunutze. Wenn der Lichtstrahl die Mitte der Spur verläßt, wird die Lichtintensität des kreisförmigen Lichtflecks auf der Photodiode E oder F kleiner; je nachdem, in welcher Richtung dar Lichtstrahl aus dar Spur läuft - radial nach innen oder nach außen - wird der Lichtfleck auf der Photodiode E heller, während er auf der Photodiode F dunkler wird.

Aus diesem Helligkeitsunterschied erzeugt ein Differenzverstärker D1 das Spurfehlersignal TE.

Damit der Lichtstrahl der abzutastenden Datenspur folgt, die infolge der Exzentrizität der Platte in radialer Richtung eine taumelnde Bewegung ausführt, bewegt der Feinantrieb die Objektivlinse in radialer Richtung, so daß sie die exzentrischen Bewegungen der Platte mitmacht.

Um den Lichtstrahl beim Abtasten der Platte stets entlang der Datenspuren führen zu können, muß jedoch der Grobantrieb kontinuierlich oder in Zeitintervallen eingeschaltet werden, damit er die optische Abtastvorrichtung nachführen kann, weil der Regelbereich des Feinantriebs nur etwa 100 Datenspuren umfaßt. Die Nachführung der Abtastvorrichtung durch den Grobantrieb sollte so erfolgen, daß der Feinantrieb symmetrisch arbeiten kann. Mit anderen Worten ausgedrückt heißt dies, daß der Feinantrieb beim Abtasten einer Datenspur möglichst in der Mittelstellung gehalten wird, um radial nach innen und außen etwa die gleiche Anzahl von Datenspuren ausregeln zu können.

Bei einer bekannten optischen Abtastvorrichtung, die nach dem Dreistrahlverfahren arbeitet, wird das Spurfehlersignal TE, die Abweichung das Istwerts vom Sollwert, dem Eingang eines PID-Reglers zugeführt, dessen Ausgang mit dem Stellglied des Feinantriebs - einer Spule - und mit einem Integrator verbunden ist. Der Ausgang des Integrators ist mit dem Stellglied des Grobantriebs verbunden, einem Elektromotor, der die Spindel antreibt. Die Regelspannung am Ausgang des Integrators bewirkt, daß der Grobantrieb so nachgeführt wird, daß der Mittelwert der Regelspannung am Ausgang des PID-Reglers null wird. Die Objektivlinse wird daher um ihre mechanische Mittellage ausgelenkt, die sie bei einer Regelspannung von 0 V annimmt.

Die mechanische Mittellage der Objektivlinse wird durch Federn oder andere elastische Elemente bestimmt, die so zu justieren sind, daß die optische Achse der Objektivlinse mit der optischen Achse der optischen Abtastvorrichtung zusammenfällt.

Alterung der Federn im Laufe der Zeit oder Trägheitskräfte, wie sie z.B. in einem Fahrzeug auftreten, bewirken, daß die optische Achse der Objektivlinse nicht mehr mit der optischen Achse der optischen Abtastvorrichtung zusammenfällt. Die mechanische Mittellage stimmt nicht mehr mit der optischen Mittellage überein, denn sie ist ein Stück von der optischen Mittellage weggewandert. Weil sich die Objektivlinse bei einer Regelspannung von 0 V nun aber nicht mehr in der optischen Mittellage befindet, ist der Regelbereich des Feinantrieb unsymmetrisch geworden.

Es ist daher Aufgabe der Erfindung, bei einer optischen Abtastvorrichtung mit einem Spurregelkreis aus einem Grob- und einem Feinantrieb, den Regelbereich des Feinantriebs symmetrisch zu halten.

Die Erfindung löst diese Aufgabe dadurch, daß das Regelsignal für den Grobantrieb aus einem Signal erzeugt wird, das der Abweichung der optischen Achse der Objektivlinse von der optischen Achse der optischen Abtastvorrichtung proportional ist.

Es zeigen

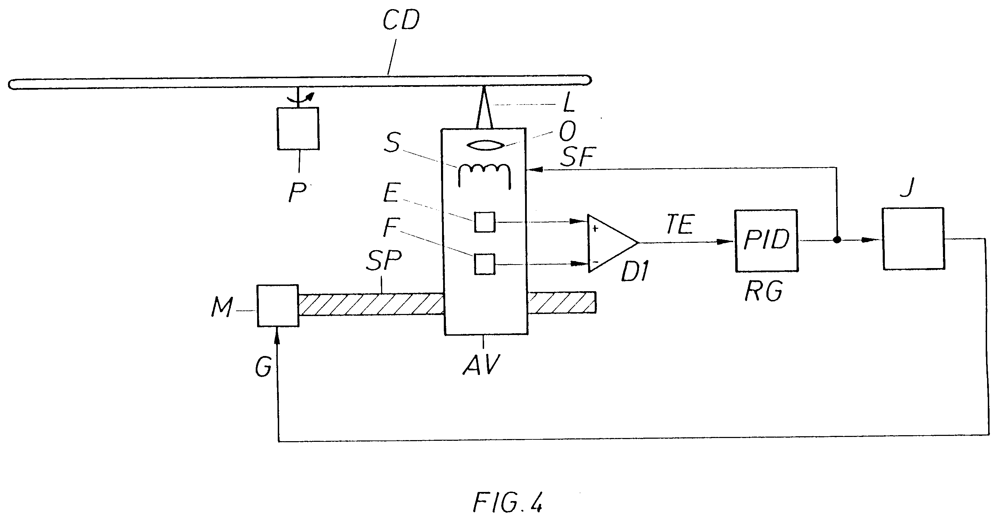

Figur 4    einen Spurregelkreis mit Grob- und Feinantrieb nach dem Stand der Technik

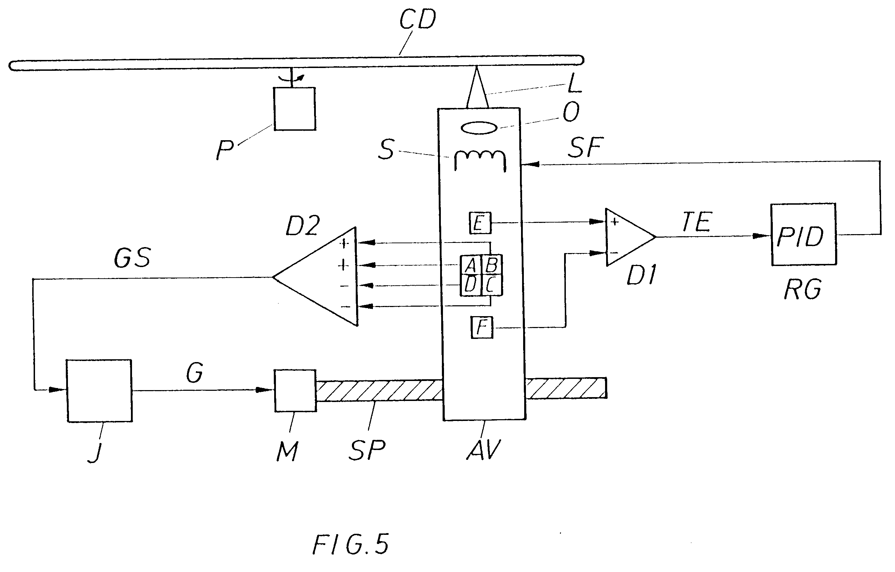

Figur 5    ein Ausführungsbeispiel der Erfindung mit einem Grob- und einem Feinantrieb

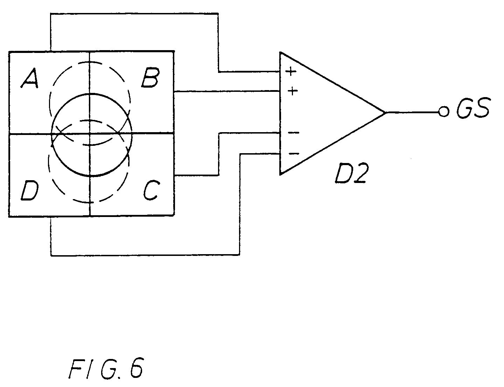

Figur 6    einen Vierquadrantenphotodetektor und einen Differenzverstärker.

In der Figur 4 wird eine Compact-Disc CD, die von einem Motor P angetrieben wird, mittels eines Lichtstrahls L von einer optischen Abtastvorrichtung AV abgetastet. In der optischen Abtastvorrichtung AV sind eine Spule S, das Stellglied des Feinantriebs, sowie die Objektivlinse 0 und die beiden Photodioden E und F eingezeichnet. Der Vierquadrantenphotodetektor und die anderen optischen Bauteile sind der übersichtlichkeit wegen nicht dargestellt.

Die Photodioden E und F sind mit den Eingängen eines Differenzverstärkers D1 verbunden, der das Spurfehlersignal TE = ES - FS bildet. Der Ausgang des Differenzverstärkers D1 ist mit dem Eingang eines PID-Reglers RG verbunden, dessen Ausgang mit dem Eingang eines Integrators I und mit der Spule S, dem Stellglied des Feinantrieb zum Bewegen der Objektivlinse, verbunden ist. Der Ausgang des Integrators I ist mit dem Stellglied des Grobantriebs verbunden, einem Motor M, der die Spindel SP antreibt, um die optische Abtastvorrichtung AV nachzuführen.

Anhand der Figuren 5 und 6 wird die Erfindung beschrieben und erläutert.

Die Erfindung geht von der Erkenntnis aus, daß der auf den Vierquadrantenphotodetektor gerichtete Lichtstrahl aus der Mitte des Vierquadrantenphotodetektors wandert, wenn die optische Achse der Objektivlinse aus der optischen Achse der optischen Abtastvorrichtung wandert.

In Figur 6 ist die Lage des Lichtflecks auf der Vierquadrantenphotodetektor gezeigt, wenn die optische Achse der Objektivlinse mit der optischen Achse der Abtastvorrichtung zusammenfällt. Die Lage des Lichtflecks für den Fall, daß die optische Achse der Objektivlinse aus der optischen Achse der Abtastvorrichtung gewandert ist, ist gestrichelt gezeichnet. Ein Differenzverstärker D2 erzeugt das Signal GS = (AS + WS) - (DS + CS), das der Abweichung der optischen Achse der Objektivlinse von der optischen Achse der Abtastvorrichtung proportional ist.

Anhand des in Figur 5 abgebildeten Ausführungsbeispiels wird die Erfindung nun näher erläutert.

Eine Platte CD, die von einem Motor P angetrieben wird, wird von einer optischen Abtastvorrichtung AV mittels eines Lichtstrahls L abgetastet. In der optischen Abtastvorrichtung AV befinden sich neben der Objektivlinse 0 weitere optische Bauteile und ein Laser sowie eine Spule S, die als Stellglied für die Objektivlinse 0 vorgesehen ist, ein Vierquadrantenphotodetektor mit vier Photodioden A, B, C und D zur Erzeugung des Datensignals und des Fokusfehlersignals und die beiden Photodioden E und F zur Erzeugung des Spurfehlersignals. Der Übersichtlichkeit wegen sind nur die Objektivlinse 0, die Spule S, der Vierquadrantenphotodetektor und die Photodioden E und F in der optischen Abtastvorrichtung AV gezeichnet.

Die Photodioden E und F sind mit den Eingängen eines Differenzverstärkers D1 verbunden, dessen Ausgang mit dem Eingang eines PID-Reglers RG verbunden ist. Der Ausgang des PID-Reglers RG ist mit der Spule S verbunden. Die Photodioden A, B, C und D des Vierquadrantenphotodetektors sind mit den Eingängen eines Differenzverstärkers D2 verbunden, dessen Ausgang mit dem Eingang eines Integrators I verbunden ist. Der Ausgang des Integrators I ist mit dem Motor M verbunden, der die Spindel SP antreibt, welche die optische Abtastvorrichtung AV nachführt. Das Regelsignal SF für den Feinantrieb wird wie beim Stand der Technik erzeugt. Das im Differenzverstärker D1 gebildete Spurfehlersignal TE = ES - FS wird dem Eingang des PID-Reglers RG zugeführt, dessen Ausgangssignal - das Regelsignal SF - an der Spule S liegt.

Das Regelsignal G für den Grobantrieb wird aber nicht wie beim Stand der Technik aus dem Regelsignal SF für den Feinantrieb abgeleitet. Die Photodioden A, B, C und D des Vierquadrantenphotodetektors sind mit den Eingängen des Differenzverstärkers D2 verbunden, der das Signal GS = (AS + BS) - (DS + CS) bildet. Aus dem Signal GS erzeugt der Integrator I das Regelsignal G für den Grobantrieb.

Weil das Regelsignal G aber proportional zur Abweichung der optischen Achse der Objektivlinse 0 von der optischen Achse der optischen Abtastvorrichtung AV ist, wirkt sich die mechanisch festgelegte Mittellage der Objektivlinse 0 nicht mehr nachteilig auf die Symmetrie des Regelbereiches des Feinantriebs aus. Der Grobantrieb führt die optische Abtastvorrichtung AV stets so nach, daß der Regelbereich des Feinantriebs symmetrisch bleibt.

Ein erster Vorteil dieses Ausführungsbeispiels zeigt sich darin, den zur Erzeugung des Datensignals und des Fokusfehlersignals erforderlichen Vierquadrantenphotodetektor auch zur Erzeugung des Regelsignals G für den Grobantrieb zu nutzen.

Ein zweiter Vorteil liegt darin, daß keine mechanischen Mittel mehr erforderlich sind, um die mechanische Mittellage der Objektivlinse zu bestimmen. Der Feinantrieb wird dadurch wesentlich einfacher, weil er aus weniger mechanischen Teilen aufgebaut ist. Dies hat auch zur Folge, daß die Produktionskosten und die Lagerhaltungskosten sinken.

Doch auch auf den Regelvorgang wirkt sich der Wegfall der mechanischen Federn oder Dämpfungsteile günstig aus, weil die Objektivlinse leichter bewegbar wird. Zum Bewegen der Objektivlinse genügen infolge der geringeren Reibung kleinere Kräfte. Die Objektivlinse reagiert daher empfindlicher auf Änderungen des Regelsignals als es beim Stand der Technik der Fall ist, wo den durch das Regelsignal verursachten Bewegungen der Objektivlinse Federkräfte und Reibungskräfte entgegenwirken. Schließlich besteht nicht mehr die Gefahr von Resonanzen, die beim Stand der Technik eben von den Federn oder Dämpfungselementen verursacht werden.

Die Erfindung ist für die optische Abtastvorrichtung eines CD-Spielers, Videoplattenspielers, DRAW-Disc-Spielers oder eines magneto-optischen Gerätes geeignet.

**Patentansprüche**

1. Optische Abtastvorrichtung, bei der ein Lichtstrahl (L) mittels einer Objektivlinse (0) auf einen rotierenden Aufzeichnungsträger (CD) fokussiert und mittels eines Spurregelkreises, der aus einem Grobantrieb (M, SP) zum Nachstellen der optischen Abtastvorrichtung (AV) und einem Feinantrieb (S) zum Führen der Objektivlinse (0) aufgebaut ist, entlang den Datenspuren des Aufzeichnungsträgers (CD) geführt wird, **dadurch gekennzeichnet,** daß das Regelsignal (G) für den Grobantrieb (M, SP) aus einem Signal (GS) erzeugt wird, das der Abweichung der optischen Achse der Objektivlinse (0) von der optischen Achse der optischen Abtastvorrichtung (AV) proportional ist.

2. Optische Abtastvorrichtung nach Anspruch 1, **dadurch gekennzeichnet,** daß ein Photodetektor vorgesehen ist, um die Abweichung der optischen Achse der Objektivlinse (0) von der optischen Achse der optischen Abtastvorrichtung (AV) zu erfassen.

3. Optische Abtastvorrichtung nach Anspruch 2, **dadurch gekennzeichnet,** daß aus den Ausgangssignalen eines Vierquadrantenphotodetektors mit vier Photodioden (A, B, C, D) neben dem Datensignal und dem Fokusfehlersignal auch das Regelsignal (GS, G) für der Grobantrieb (M, SP) gewonnen wird.

4. Optische Abtastvorrichtung nach Anspruch 3, **dadurch gekennzeichnet,** daß das Spurfehlersignal (TE) für den Feinantrieb (S), das in einem ersten Differenzverstärker (D1) gebildet wird, einem Regler (RG) zugeführt wird, dessen Ausgang mit der Stellglied (S) des Feinantriebs verbunden ist, daß die Summe der Ausgangssignale der einen beiden nebeneinander liegenden Photodioden (A, B) des Vierquadrantenphotodetektors von der Summe der Ausgangssignale der anderen beiden nebeneinander liegenden Photodioden (C, D) in einem zweiten Differenzverstärker (D2) abgezogen wird, daß der Ausgang des zweiten Differenzverstärkers (D2) mit dem Eingang eines Integrators (I) verbunden ist und daß der Ausgang des Integrators (I) mit dem Stellglied (M) des Grobantriebs verbunden ist.

5. Optische Abtastvorrichtung nach Anspruch 1, 2, 3 oder 4, **dadurch gekennzeichnet,** daß als Regler (RG) für den Spurregelkreis ein PID-Regler vorgesehen ist.

6. Optische Abtastvorrichtung nach Anspruch 1, 2, 3, 4 oder 5, **dadurch gekennzeichnet,** daß keine mechanischen Mittel vorgesehen sind, um die mechanische Mittellage der Objektivlinse (0) festzulegen.

$$HF = AS + BS + CS + DS$$

$$FE = (AS + CS) - (BS + DS) = 0$$

$$TE = ES - FS = 0$$

FIG.1

$$FE = (AS + CS) - (BS + DS) = 0$$

$$TE = ES - FS < 0$$

FIG.2

6

$$FE = (AS + CS) - (BS + DS) = 0$$

$$TE = ES - FS > 0$$

FIG.3

FIG. 4

FIG.5

FIG. 6